Europäisches Patentamt

European Patent Office

Office européen des brevets

(11) Publication number: **0 261 716 B1**

# EUROPEAN PATENT SPECIFICATION

(45) Date of publication of patent specification: **25.09.91**    (51) Int. Cl.⁵: **F02F 3/26**, F02B 23/08, F02F 1/38

(21) Application number: **87201682.9**

(22) Date of filing: **07.09.87**

(54) Combustion chamber for a reciprocating engine.

(30) Priority: **22.09.86 IT 2296986 U**

(43) Date of publication of application:
**30.03.88 Bulletin 88/13**

(45) Publication of the grant of the patent:
**25.09.91 Bulletin 91/39**

(84) Designated Contracting States:
**DE FR GB**

(56) References cited:
**DE-A- 2 950 754**
**FR-A- 941 585**
**FR-A- 2 349 030**
**US-A- 2 991 780**

(73) Proprietor: **ALFA LANCIA S.p.A.**
**Viale Alfa Romeo**
**I-20020 Arese, Milan(IT)**

(72) Inventor: **Malter, Ugo**
**Via Val Cannobina 6**
**I-20152 Milan(IT)**

(74) Representative: **Henke, Erwin et al**
**Ing.Barzanò & Zanardo Milano S.p.A. Via Borgonuovo, 10**
**I-20121 Milano(IT)**

## Description

The present invention relates to a combustion chamber in an internal-combustion reciprocating engine, with parallel inlet valves and exhaust valves, wherein said chamber is formed by a first hollow provided in the cilinder head, and by a second hollow provided in the piston head, as shown in DE-A-2950754.

The performance characteristics of an internal combustion engine depend, to a large extent, on the optimization of the design, and of the construction of the combustion chamber of the same engine.

The overall architecture and shape of the combustion chamber have an influence, in particular, on the mixing of the charge, on the path of the flame front, on the cooling of its walls, in particular as regards the shape, the surface/volume ratio of the said chamber and the position of the spark plug, in the gasoline engines.

The construction technique is considerably important not only as regards the determination of the production costs, but also in order to secure a good end quality level of the product.

Thus, the selection of the several parameters is aimed at improving the ignition and combustion of the charge, so to reduce fuel consumptions and concentrations of polluting substances inside the exhaust gases, and also optimize the production process.

In order to solve these problems in an engine with a combustion chamber of the above disclosed type, the present Applicant has proposed to provide two hollows according the characterizing portion of claim 1.

By means of this solution, a combustion chamber is achieved, which is defined by walls having a geometrically simple shape, which can be therefore easily machined by milling; the possibility derives therefrom of obtaining, in production, chambers with very narrow dimensional tolerances, and of therefore having guaranteed a good constancy of the compression ratio, with no need for further checks.

According to a preferred solution, is case of a gasoline-fed engine, the spark plug(s) is(are) placed substantially perpendicularly to the walls formed by the second frusto-conical portions, so that the electrodes of the same spark plug(s) can protrude into the interior of the combustion chamber, and can be surely concerned by a charge having a correct mixing ratio, hence being easily ignitable.

Preferably, furthermore, the second hollow, provided in the head of the piston, has a substantially circular frusto-conical shape, wherein the longer radius of the said second hollow is substantially equal to the longest bending radius of the second frusto-conical portions of the side walls of said first hollow.

Hence, between the lower wall of the cylinder head, and the upper wall of the piston, two low-thickness cavities are formed wherein, at the end of the compression stroke of the piston, the charge is squeezed (squish action) and pushed towards the interior of the combustion chamber, with a turbolence effect which improves the mixing of the said charge, in particular in correspondence of the spark plug.

Characteristics and advantages of the present invention are now illustrated by referring to the hereto attached Figures 1 through 3, wherein a preferred form of practical embodiment of the same invention is shown as a not limitative example thereof.

Figure 1 is a partial sectional view of an engine having a combustion chamber constructed according to the present invention,

Figure 2 is a view of a partial longitudinal section of the same engine with the combustion chamber of Figure 1, and

Figure 3 is a view according to the line III-III of Figure 2.

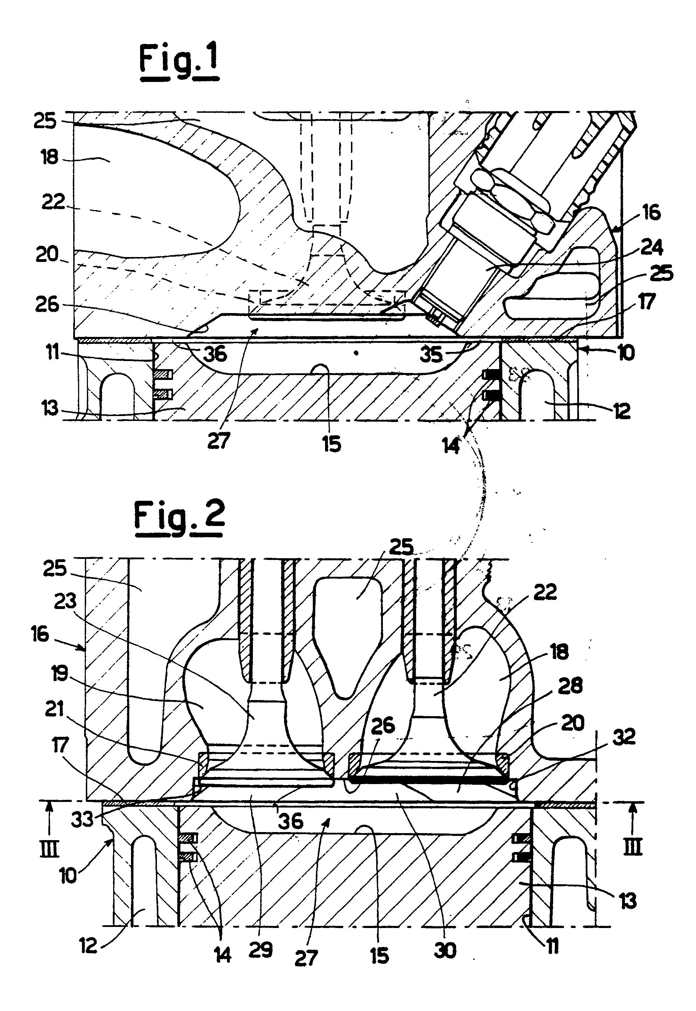

In Figures 1 and 2, by the reference numeral 10 the cylinder block of an internal-combustion reciprocating engine is generally shown; by 11 an integral-barrel cylinder is indicated, and by 12 the jacket is indicated, inside which the cooling water of the same cylinder flows.

By the reference numeral 13, the piston sliding inside the cylinder 11 is shown; said piston 13 is provided with gas rings 14, and in its head a hollow 15 is provided, which has a frusto-conical, substantially circular shape.

By 16, the cylinder head is generally indicated, which fastened to the cylinder block 10 by means of usual stud bolts (not shown), with the interposition of the gasket 17.

By the reference numerals 18 and 19, inlet and exhaust ducts of cylinder 11 are indicated; by 20 and 21, the valve seats, and by 22 and 23 the related inlet and exhaust valves are shown, which are placed parallel to each other and vertical; by the reference numeral 24, a spark plug is indicated.

Then by 25 the jackets for head 16 cooling water circulation are indicated.

By the reference numeral 26, a hollow is indicated, which is provided in the head 16, which, together with the hollow 15 of piston 13, forms the combustion chamber of the cylinder 11, generally indicated by 27.

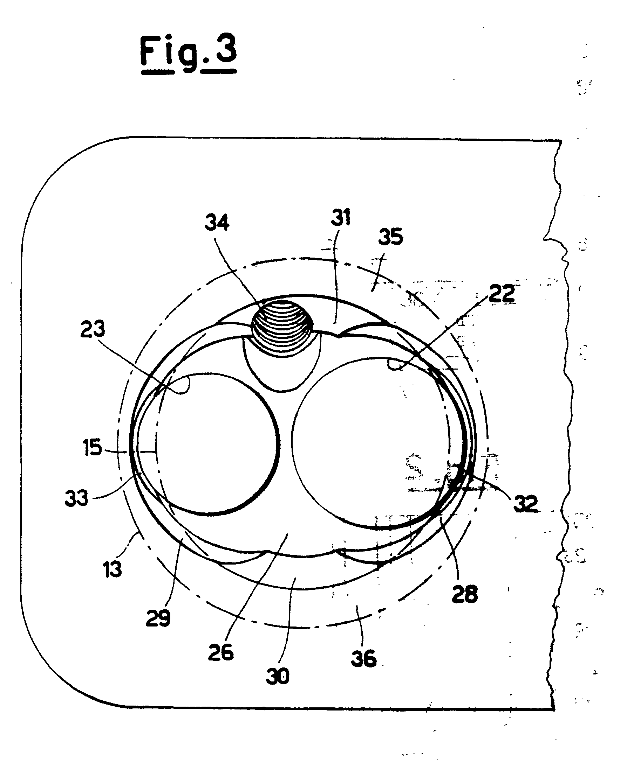

The hollow 26, according to the present invention, has a frusto-conical shape, having a substantially elliptical cross section, on which bottom wall valves 22 and 23 appear, as it results in particular from Figures 2 and 3.

The side walls of the hollow 26 are formed by the frusto-conical portions 28 and 29, situated at the ends of the longer axis of said substantially elliptical cross section, and by the frusto-conical portions 30 and 31, situated at the ends of the shorter axis of the same substantially elliptical section, and ra diused with the portions indicated by 28 and 29.

In the particular case herein exemplified, the side walls comprise also bevelled cylindrical portions 32 and 33, situated at the ends of the longer axis of the elliptical cross section, and radiused with the portions indicated by 28 and 29.

These latter wall portions result from the machining of the valve seats 20 and 21.

In Figure 3, by the reference numeral 34 the screw-threaded bore is indicated, inside which the spark-plug 24 is screwed down, perpendicularly to the wall 31, and with its electrodes protruding inside the hollow 26.

As it appears from the Figures, the walls 28, 29, 30 and 31 of the hollow 26 have geometrically simple shapes, they are hence easily machined by milling, so to accomplish, in production, combustion chambers having very narrow dimensional tolerances; that secures a high-enough precision of the compression ratio of the engine, with no need for further checks. Furthermore, the smooth walls prevent carbonaceous deposits, the residue of charge combustion, from stably adhering thereto. The combustion chamber 27, comprising the two hollows 15 and 26, having the shape of a frusto-conical tank, results satisfactorily compact, and shows a favourable surface/volume ratio, both as relates to a favourable path of the flame front, in connexion with the position of the spark plug, and as relates to the possibility of cooling of the walls.

Furthermore, in as much as the longest radius of the hollow 15 is substantially equal to the longest bending radius of the frusto-conical walls 30 and 31 between the upper ring wall of the piston head 13 and the lower wall of the cylinder head 16, two cavities 35 and 36 are formed, which substantially have a sickle shape, and which take a reduced thickness when the piston 13, during its compression stroke, approaches the top dead centre (T.D.C.).

Inside these two cavities 35 and 36, the charge is squeezed (squish action) and is pushed towards the interior of the combustion chamber 27, with a turbolence effect, which improves the mixing of the same charge, in particular in correspondence with the spark plug 24, thus avoiding delays in the actual time point of charge ignition.

## Claims

1. Combustion chamber (27) in an internal-combustion reciprocating engine, with parallel inlet valves (22) and exhaust valves (23), wherein said chamber (27) is formed by a first hollow (26) provided in the cylinder head (16), and by a second hollow (15) provided in the piston head (13), characterized in that said first hollow (26) has a frusto-conical shape and a substantially elliptical cross section, has its side walls formed by first frusto-conical portions (28, 29) situated at the ends of the longer longitudinal axis of said substantially elliptical cross section, and by second frusto-conical portions (30, 31) situated at the ends of the shorter transversal axis of said substantially elliptical cross section, said first (28, 29) and second (30, 31) frusto-conical portions being radiused with each other and realizing a bottom wall in which open vertically said inlet and exhaust valves (22, 23), and in that said second hollow (15) has a substantially circular frusto-conical shape.

2. Combustion chamber according to claim 1, characterized in that said side walls are furthermore formed by bevelled cylindrical portions (32, 33), which also are positioned at the ends of the longer axis of said substantially elliptical cross section, and are radiused with said first frusto-conical portions (30, 31).

3. Combustion chamber according to claim 1 characterized in that at least one spark plug (24) is positioned substantially perpendicularly to one (31) of said side walls formed by said second frusto-conical portions (30, 31).

4. Combustion chamber according to claim 1, characterized in that said second hollow (15) has its longer radius substantially equal to the longest bending radius of said second frusto-conical portions (30, 31) of said first hollow (26).

## Revendications

1. Chambre de combustion (27) de moteur à combustion interne à pistons alternatifs, comprenant des soupapes d'admission (22) et d'échappement (23) parallèles, dans laquelle ladite chambre (27) est formée d'une première cavité (26) prévue dans la culasse (16) et d'une deuxième cavité (15) formée dans la tête (13) du piston, caractérisée en ce que ladite première cavité (26) présente une forme tronconique et une section transversale sensiblement elliptique, a ses parois latérales formées par des premières parties tronconiques (28, 29) situées aux extrémités du grand axe longitudinal de ladite section sensiblement elliptique, et des deuxièmes parties tronconiques (30, 31) situées aux extrémités du petit axe transversal de ladite section sensiblement elliptique, lesdites premières (28, 29) et deuxièmes (30, 31) parties tronconiques étant raccordées les unes aux autres et réalisant une paroi de fond dans laquelle débouchent verticalement, lesdites soupapes d'admission et d'échappement (22, 23), et en ce que ladite deuxième cavité (15) possède une surface tronconique sensiblement circulaire.

2. Chambre de combustion salon la revendication 1, caractérisée en ce que lesdites parois latérales sont en outre formées par des parties cylindriques chanfreinées (32, 33), qui sont aussi placées aux extrémités du grand axe de ladite section sensiblement elliptique et sont raccordées auxdites premières parties tronconiques (30, 31).

3. Chambre de combustion selon la revendication 1, caractérisée en ce qu'au moins une bougie d'allumage (24) est placée sensiblement perpendiculairement à l'une (31) desdites parois latérales formées par lesdites deuxièmes parties tronconiques (30, 31).

4. Chambre de combustion selon la revendication 1, caractérisée en ce que ladite deuxième cavité (15) possède un grand rayon sensiblement égal au plus long rayon de courbure desdites deuxièmes parties tronconiques (30, 31) de ladite première cavité (26).

**Patentansprüche**

1. Brennkammer (27) in einer Verbrennungskraftmaschine mit parallelen Einlaßventilen (22) und Auslaßventilen (23), wobei die Kammer (27) von einem ersten, im Zylinderkopf (16) ausgebildeten Raum (26) und einem zweiten, im Kolbenkopf (13) ausgebildeten Raum (15) gebildet ist, dadurch gekennzeichnet, daß der erste Raum Kegelstumpf-Form und einen im wesentlichen elliptischen Querschnitt aufweist, wobei die Seitenwände von ersten, kegelstumpfförmigen Abschnitten (28,29), welche an den Enden der längeren Längsachse des im wesentlichen elliptischen Querschnitts angeordnet sind, und von zweiten, kegelstumpfförmigen Abschnitten (30,31) gebildet sind, welche an den kürzeren Querachsen des im wesentlichen elliptischen Querschnitts angeordnet sind, wobei die ersten (28,29) und zweiten (30,31) kegelstumpfförmigen Abschnitte abgerundet ineinander übergehen und eine Bodenwand ausbilden, in welche vertikal die Einlaß- und Auslaßventile (22,23) öffnen, und daß der zweite Raum (15) eine im wesentlichen kreisförmige Kegelstumpf-Form aufweist.

2. Brennkammer nach Anspruch 1, dadurch gekennzeichnet, daß die Seitenwände weiters von abgeschrägten bzw. abgesetzten zylindrischen Abschnitten (32,33) gebildet sind, welche ebenfalls an den Enden der längeren Achse des im wesentlichen elliptischen Querschnitts angeordnet sind und abgerundet in die ersten kegelstumpfförmigen Abschnitte (30,31) übergehen.

3. Brennkammer nach Anspruch 1, dadurch gekennzeichnet, daß wenigstens eine Zündkerze (24) im wesentlichen normal auf eine (31) der Seitenwände angeordnet ist, welche von den zweiten kegelstumpfförmigen Abschnitten (30,31) gebildet sind.

4. Brennkammer nach Anspruch 1, dadurch gekennzeichnet, daß der längere Radius des zweiten Raumes (15) im wesentlichen gleich dem längsten Krümmungsradius der zweiten kegelstumpfförmigen Abschnitte (30,31) des ersten Raumes (26) ist.

## Fig.1

## Fig.2

# Fig.3